Europäisches Patentamt

European Patent Office

Office européen des brevets

(11) Publication number: **0 259 541**
A2

# (12) EUROPEAN PATENT APPLICATION

(21) Application number: 87105730.3

(22) Date of filing: 16.04.87

(51) Int. Cl.³: **H 04 N 1/032**

(30) Priority: 22.08.86 US 899447

(43) Date of publication of application:
16.03.88 Bulletin 88/11

(84) Designated Contracting States:
DE FR GB

(71) Applicant: HEWLETT PACKARD COMPANY
Legal Department 3000 Hanover Street
Palo Alto, CA 94304(US)

(72) Inventor: Taub, Howard H.
1556 Eddington Place
San Jose, CA 95129(US)

(72) Inventor: Lloyd, William J.
2708 Comstock Circle
Belmont, CA 94402(US)

(72) Inventor: Hirsch, Gregory
365 Talbot Avenue
Pacifica, CA 94044(US)

(72) Inventor: Meyer, John D.
525 Mariposa Avenue
Mountain View, CA 94041(US)

(74) Representative: Liesegang, Roland, Dr.-Ing.
FORRESTER & BOEHMERT Widenmayerstrasse 4
Postfach 22 01 37
D-8000 München 22(DE)

(54) Method for printing gray scales with a thermal ink jet printer.

(57) A thermal ink jet printer emits drops (7) that merge together (1) on the surface of a substrate (3) within the wetting time of the substrate (3). The size of the dot printed is controlled by the number of drops emitted by the thermal ink jet printer (15) within the wetting time of the substrate (3).

FIG 4

The invention relates to thermal ink jet printing techniques. More particularly, the invention relates to thermal ink jet printing techniques that produce gray scales.

Thermal ink jet printers emit ink droplets as described by U.S. Patent No. 4,353,079, entitled Electronic Device Having A Variable Density Thermal Ink Jet Recorder and U.S. Patent No. 4,503,444 entitled Method And Apparatus For Generating A Gray Scale With A High Speed Thermal Ink Jet Printer which are incorporated by reference herein.

U.S. Patent No. 4,339,762 describes a thermal ink jet printer that produces gray scale. This is achieved by supplying different amounts of heat to the heating surface and by controlling the amount of ink ejected by the strength of the electrical input signal applied to the heating surface. This method produce drops having a volume within a limited range. This restricts the range of printed dot sizes. Also, this method cannot precisely control the dot size. Furthermore, this method subjects the print head to excessive wear and stress.

U.S. Patent No. 4,353,079 describes using a thermal ink jet printer to print gray scale. Dots having different shades

1

of gray are obtained by ejecting multiple dots to the same location of the paper. The spreading ink produced by the multiple drops varies the dot diameter. Patent 4,353,079 does not teach ejecting the drops during the wetting time of the paper, that, during the time capillary action has not begun. Instead, it teaches increasing dot diameter by having the ink spread or run after wetting has begun. This implies that some drops are ejected after the previously ejected drops have been absorbed by the paper. This procedure has the disadvantage of using large quantities of ink. This tends to weaken the paper. Furthermore, this procedure requires a high degree of accuracy to prevent random increases in dot size resulting from imprecise dot placement.

U.S. Patent No. 4,503,444 describes a thermal ink jet printer and method of using for producing gray scale printing. This patent describes ejecting a series of connected drops that remain connected in flight and arrive on the paper in this state. In order for the drops to remain connected in flight, they must travel at low velocities. Drops traveling at low velocities have poor trajectories and result in poor print reliability. The trajectories are subject and more sensitive to defects in the print head and variations in the print head travel speed. If the print head travel speed is high, a group of drops traveling at low velocity will smear across the paper instead of forming a circular dot. Patent 4,503,444 therefore does not teach ejecting a series of separate drops that merge after reaching the paper.

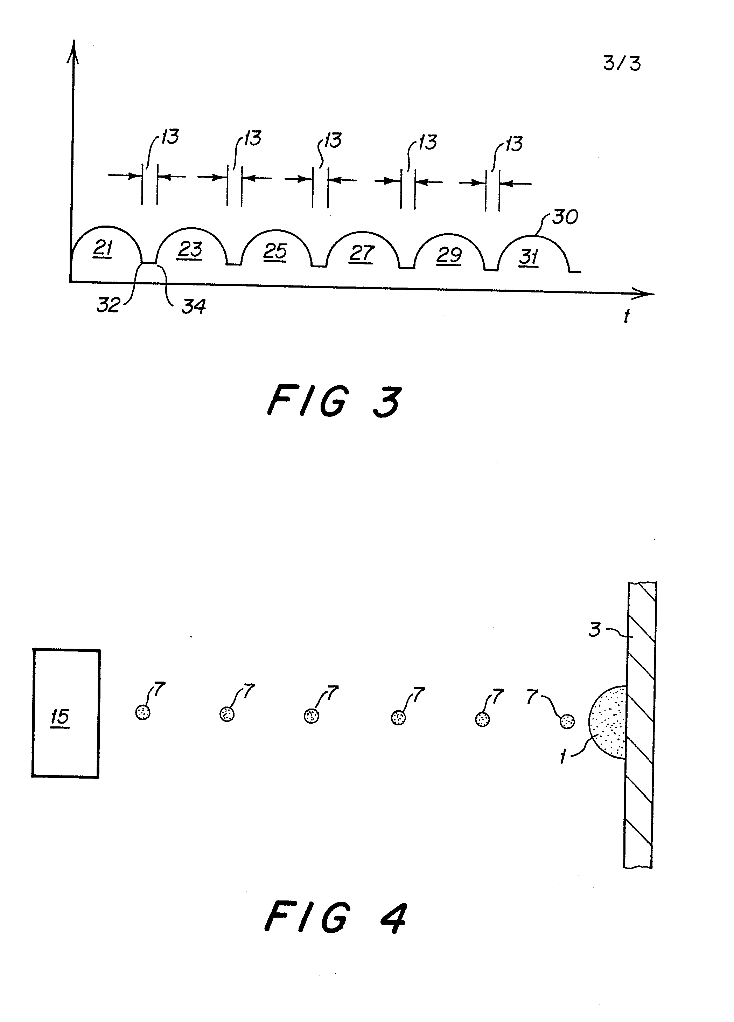

The invention is a method of printing gray scale by emitting a series of drops that merge on the substrate within the wetting time of the substrate. The present invention, as shown in Figure 4, emits drops from a thermal ink jet print head 15 at a wide variety of rates. The drops 7 travel at high velocity and unconnected to other drops 7. The drops 7 merge together when they reach the substrate 3 during the wetting time of the substrate 3. Dot size is incremented by increasing the number of drops which merge together to form a hemisphere-like ink bead on the substrate during its wetting time. (An advantage of the invention is that it permits the use of ink drops that travel at high velocities.) These high velocity ink drops have improved trajectories and greater target accuracy. Also, the present invention uses less ink. Less ink is required because each drop results in an increase of dot diameter. Since less ink is required to print a dot of a given size, the substrate does not get as wet and maintains its strength. Also, this procedure permits greater control of dot size since the diameter of the hemispherical bead increases predictably with the volume of ink in the bead. The improved control over the dot size produces a higher quality image for a given resolution.

Figures 1A and 1B show the absorption of ink into a

3

substrate.

Figures 2A and 2B show how drops added to the hemispherical bead during the wetting time increase the radius of the bead in accordance with the invention.

Figure 3 shows the growth and collapse cycle of the vapor bubble in the thermal ink jet print head.

Figure 4 shows the preferred embodiment of the invention.

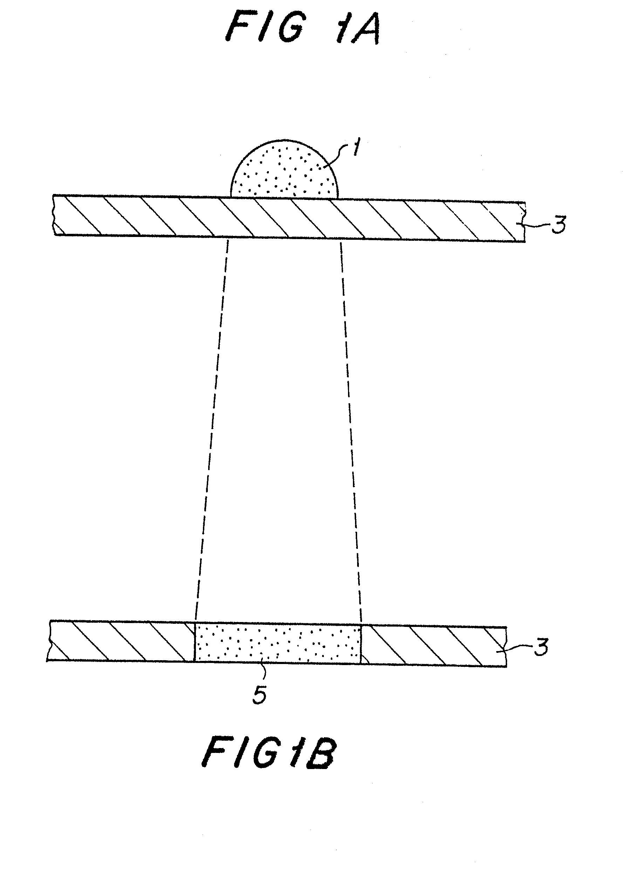

Observation and measurements of ink-substrate interactions reveal that the absorption of ink into the substrate occurs in two steps as shown in Figures 1A and 1B. The instant a drop impacts the substrate 3 it forms a hemispherical bead 1 shown in Figure 1A. This hemisphere-like shape occurs regardless of the material comprising the substrate 3. The hemispherical bead shape 1 lasts for about 1 msec when the substrate is paper. During this time interval, known as the wetting time, the ink bead 1 begins wetting the substrate 3 as a precondition for capillary action to commence since no capillary action has taken place, no significant decrease in ink volume sitting on the surface of the substrate is observed. After the substrate 3 is wetted, capillary forces start and draw the ink 1 into the substrate 3 to form the dot 5. As the ink 1 is drawn into the substrate, it spreads sideways to enlarge the dot 5.

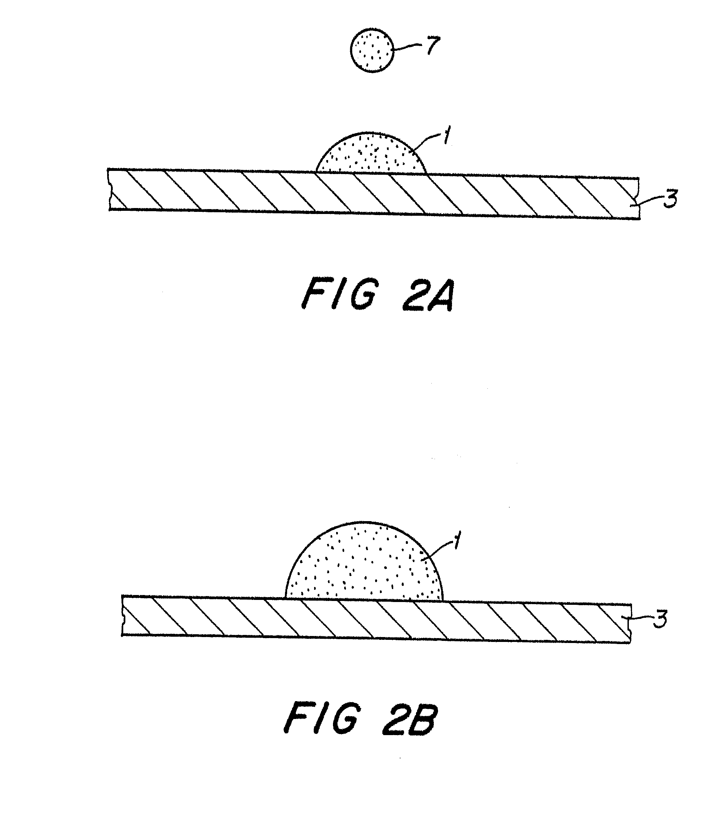

If a drop 7 of ink arrives at the bead 1 during this wetting time, surface tension forces draw it into the bead 1 as shown in Figures 2A and 2B. This action has the important effect of immediately enlarging the radius of the bead 1 and thereby providing a larger initial dot 5 size that is further enlarged through spreading and diffusion. If the drop 7 arrives at the dot 5 after the wetting time has expired as shown in Figure 1B, the dot 5 is not significantly enlarged. Instead, the substrate 3 gets wetter. Furthermore, if the post-wetting time drop 7 is not accurately aligned with the dot 5, a random increase in dot 5 size results.

In order to deposit the drops 7 on the substrate 3 within its wetting time, drops should be ejected from the thermal ink jet print head at the highest rate possible. This rate is controlled by the capillary fill time of the print heat, the thermal relaxation time of the print head, and the growth and collapse cycle time of the ink vapor bubbles 11 shown in Figure 3. Although the capillary refill time and thermal relaxation time of existing and widely used print heads limit the ejection rate, they do not prohibit practice of the present invention. The present invention can be practiced with existing print heads. The drop ejection rate of these print heads is increased by properly energizing the resistor elements of the print in relation to the growth and collapse cycle of the vapor bubbles, as shown in Figure 3.

If the resistor elements of a thermal ink jet print head are energized when covered with a vapor bubble, the print head will not eject an ink drop. The heat from the resistive elements is insulated by the vapor bubble and is unable to

5

cause further vaporization to eject a next ink drop. It is possible to eject the Nth drop in a sequence of drops only after the vapor bubble associated with the (N-1)th drop no longer covers the resistor element. Figure 3 shows the growth and collapse cycle of a series of vapor bubbles. The volume of vapor bubble 21 grows to initiate an ejection of an ink drop from the print head. Then the volume of the vapor bubble 21 decreases in size and the ink drop is ejected as a result. The vapor bubble continues to collapse until fully collapsed as shown by time 32. After time 32, the resistive element of the printhead may be energized to begin heating the subsequent drop 23. In order to increase the ejection rate of the print head, the time between the full collapse of the bubble 32 and heating of resistive element for the jection of the subsequent ink drop 23 should be minimized. This time interval 13 should typically fall within the range of 0.1 μsec. and 1.0 msec. Decreasing this time interval increases the number of ink drops 7 that can reach the substrate 3 within the wetting time.

6

Claims

1. A method of printing a dot on a substrate using a thermal ink jet head, c h a r a c t e r i z e d by
ejecting a plurality of drops (7) from said thermal ink jet head (15) within the wetting time of said substrate (3); and
collecting said plurality of drops (7) on one location of said substrate (3).

2. The method as in claim 1, c h a r a c t e r i z e d by
controlling the dot size (5) by controlling the number of drops (7) ejected within the wetting time of said substrate (3).

3. The method as in claim 2, c h a r a c t e r i z e d in that the step of ejecting a plurality of drops (7) further comprises:
heating a first ink volume (31) in said thermal ink jet head (15) to form a vapor bubble;
ejecting a portion of said ink volume (31) from said thermal ink jet head (15);
delaying (13) the subsequent heating of a subsequent ink volume (29) until the remainder of said vapor bubble collapses.

4. The method as in claim 3, c h a r a c t e r i z e d in that the subsequent heating is delayed for 0.1 µsec to 1.0 msec (13).

7

FIG 1A

FIG1B

FIG 2A

FIG 2B

FIG 3

FIG 4